# EUROPÄISCHE PATENTSCHRIFT

(11) **EP 4 169 774 B1**
(45) Veröffentlichungstag und Bekanntmachung des Hinweises auf die Patenterteilung: **23.04.2025**
(21) Anmeldenummer: 22202432.5
(22) Anmeldetag: 19.10.2022
(51) Int. Cl.: B60R 5/04

(54) **LADERAUMABDECKVORRICHTUNG UND KRAFTFAHRZEUG**
LOAD COMPARTMENT COVERING DEVICE AND MOTOR VEHICLE
DISPOSITIF DE RECOUVREMENT DE COFFRE ET VÉHICULE AUTOMOBILE

(30) Priorität: 25.10.2021 DE 102021211994
(43) Veröffentlichungstag der Anmeldung: 26.04.2023
(73) Patentinhaber: Volkswagen Aktiengesellschaft, 38440 Wolfsburg (DE); Skoda Auto A.S., 293 60 Mladá Boleslav (CZ)
(72) Erfinder: Gaas, Matthias, 38442 Wolfsburg (DE); Rubes, David, CZ-518 01 Dobruska (CZ)
(74) Vertreter: Bals & Vogel Patentanwälte PartGmbB

(56) Entgegenhaltungen:
- EP-A1- 1 211 111
- EP-A1- 2 028 053
- EP-A2- 1 182 066
- EP-A2- 2 289 723

## Beschreibung

Die vorliegende Erfindung betrifft eine Laderaumabdeckvorrichtung zum automatischen Abdecken und Freigeben einer Laderaumöffnung eines Laderaums eines Kraftfahrzeugs. Ferner betrifft die Erfindung ein Kraftfahrzeug mit einer gattungsgemäßen Laderaumabdeckvorrichtung.

Es sind Kraftfahrzeuge mit Laderäumen bekannt, bei welchen eine obere Laderaumöffnung durch eine Laderaumabdeckvorrichtung automatisch abdeckbar sowie freigebbar ist. Aus der DE 101 02 792 A1 ist eine Laderaumabdeckvorrichtung mit einem Abdeckrollo bekannt, welches mittels einer Antriebsvorrichtung zum Abdecken sowie zum Freigeben der Laderaumöffnung linear bewegbar ist. Die Antriebsvorrichtung weist einen Kabeltrieb mit einem Antriebskabel und einem Elektromotor zum Antreiben des Antriebskabels auf. Ferner ist ein Lamellenende des Abdeckrollos beidseitig jeweils an einem linear geführten Schlitten befestigt. Das Dokument DE 198 25 353 C2 zeigt eine Laderaumabdeckvorrichtung, bei welcher die Antriebsvorrichtung anstatt eines Kabeltriebs einen Riementrieb mit einem endlosen Zahnriemen, der über zwei Umlenkrollen geführt ist, aufweist.

Die DE 101 23 420 A1 beschreibt einen Antrieb für ein verstellbares Schließelement eines Fahrzeugdaches, welches eine Dachöffnung wahlweise verschließt oder mindestens teilweise freigibt. Die DE 10 2007 040 282 A1 zeigt eine Abdeckvorrichtung für einen Kraftfahrzeuginnenraum mit einer flächig aufspannbaren und auf einer drehbar gelagerten Wickelwelle aufrollbaren Abdeckbahn, an der eine Zugstange angeordnet ist. Weitere Abdeckvorrichtungen sind aus den Dokumenten EP 2 289 723 A2, EP 2 028 053 A1,
EP 1 211 111 A1 und EP 1 182 066 A2 bekannt.

Bekannte Laderaumabdeckvorrichtungen haben den Nachteil einer hohen Komplexität sowie einer schweren Montierbarkeit. Bei einigen Vorrichtungen ist eine Vielzahl von Bauteilen in der Endmontage aufwendig zusammenzufügen. Hierdurch wird der Aufwand in der Endmontage wesentlich erschwert. Andere Vorrichtungen sind bereits als kompakte Baugruppen bereitstellbar, die ein verhältnismäßig hohes Gesamtgewicht aufweisen und häufig nur unter Einsatz aufwendiger Montagehilfsmittel montierbar sind. Dies führt zu längeren Durchlaufzeiten in der Endmontage und zumeist zu höheren Herstellungskosten.

Es ist daher Aufgabe der vorliegenden Erfindung, die voranstehend beschriebenen Nachteile bei einer Laderaumabdeckvorrichtung zu beheben oder zumindest teilweise zu beheben. Insbesondere ist es Aufgabe der vorliegenden Erfindung, eine Laderaumabdeckvorrichtung zum automatischen Abdecken und Freigeben einer Laderaumöffnung eines Laderaums eines Kraftfahrzeugs und ein Kraftfahrzeug zu schaffen, die auf eine einfache und kostengünstige Art und Weise eine reduzierte Komplexität und/oder eine verbesserte Montierbarkeit aufweisen.

Die voranstehende Aufgabe wird durch die Patentansprüche gelöst. Demnach wird die Aufgabe durch eine Laderaumabdeckvorrichtung zum automatischen Abdecken und Freigeben einer Laderaumöffnung eines Laderaums eines Kraftfahrzeugs mit den Merkmalen des unabhängigen Anspruchs 1 sowie durch ein Kraftfahrzeug mit den Merkmalen des nebengeordneten Anspruchs 13 gelöst. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Laderaumabdeckvorrichtung beschrieben sind, selbstverständlich auch im Zusammenhang mit dem erfindungsgemäßen Kraftfahrzeug und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe durch eine Laderaumabdeckvorrichtung zum automatischen Abdecken und Freigeben einer Laderaumöffnung eines Laderaums eines Kraftfahrzeugs gelöst. Die Laderaumabdeckvorrichtung weist eine ausfahrbare sowie einfahrbare Laderaumabdeckung zum Abdecken des Laderaums, eine Führungsvorrichtung zum linearen Führen der Laderaumabdeckung zwischen einem ausgefahrenen Zustand, in welchem die Laderaumabdeckung den Laderaum bedeckt sowie einem eingefahrenen Zustand, in welchem die Laderaumabdeckung den Laderaum freigibt, und ein Antriebssystem zum gezielten Bewegen der Laderaumabdeckung auf. Das Antriebssystem weist ein Gehäuse auf. Ferner weist das Antriebssystem zum Bewegen der Laderaumabdeckung eine erste flexible Welle, eine zweite flexible Welle sowie einen Motor zum Bewegen der ersten flexiblen Welle und der zweiten flexiblen Welle auf. Die Führungsvorrichtung weist zum linearen Führen der Laderaumabdeckung eine erste Führungsschiene, einen an der ersten Führungsschiene linear beweglich geführten, an einer ersten Abdeckungsseite der Laderaumabdeckung befestigbaren ersten Führungsschlitten, eine zweite Führungsschiene sowie einen an der zweiten Führungsschiene linear beweglich geführten, an einer zweiten Abdeckungsseite der Laderaumabdeckung befestigbaren zweiten Führungsschlitten auf. Die erste flexible Welle ist mit dem ersten Führungsschlitten und die zweite flexible Welle mit dem zweiten Führungsschlitten mechanisch gekoppelt. Das Antriebssystem weist ein erstes Führungsrohr sowie ein zweites Führungsrohr auf, wobei die erste flexible Welle zumindest teilweise in dem ersten Führungsrohr und die zweite flexible Welle zumindest teilweise in dem zweiten Führungsrohr angeordnet ist. Ein erster Rohrendbereich des ersten Führungsrohrs ist an einem ersten Schienenendbereich der ersten Führungsschiene gehalten, wobei der erste Schienenendbereich einem Bereich der ersten Führungsschiene, in welchem der erste Führungsschlitten in dem eingefahrenen Zustand angeordnet ist, benachbart ist. Ein zweiter Rohrendbereich des zweiten Führungsrohrs ist an einem zweiten Schienenendbereich der zweiten Führungsschiene gehalten, wobei der zweite Schienenendbereich einem Bereich der zweiten Führungsschiene, in welchem der zweite Führungsschlitten in dem eingefahrenen Zustand angeordnet ist, benachbart ist. Ferner weist das Antriebssystem ein erstes Staurohr zur Aufnahme eines ersten Abschnitts der ersten flexiblen Welle beim Bewegen des ersten Führungsschlittens in den eingefahrenen Zustand und ein zweites Staurohr zur Aufnahme eines zweiten Abschnitts der zweiten flexiblen Welle beim Bewegen des zweiten Führungsschlittens in den eingefahrenen Zustand auf. Erfindungsgemäß ist ein vom Motor wegweisender zweiter Staurohrbereich des zweiten Staurohrs an dem ersten Führungsrohr gehalten.

Die Laderaumabdeckvorrichtung weist die Laderaumabdeckung, die Führungsvorrichtung und die Antriebsvorrichtung auf. Die Laderaumabdeckung ist ausgebildet, die Laderaumöffnung des Laderaums in dem ausgefahrenen Zustand abzudecken und in dem eingefahrenen Zustand freizugeben. Die Laderaumabdeckung ist erfindungsgemäß vorzugsweise rolloartig oder lamellenartig ausgebildet. Eine rolloartig ausgebildete Laderaumabdeckung ist vorzugsweise aufrollbar ausgebildet und weist somit neben einem verhältnismäßig geringen Gewicht einen besonders geringen Bauraum auf. Eine lamellenartig ausgebildete Laderaumabdeckung ist vorzugsweise aufrollbar oder faltbar ausgebildet, weist vorzugsweise mehrere schwenkbar miteinander gekoppelte Querlamellen auf und kann eine besonders hohe Stabilität aufweisen. Alternativ kann die Laderaumabdeckung erfindungsgemäß auch rolloartig ausgebildet sein und zur Erhöhung der Stabilität eine oder mehrere Querlamellen aufweisen.

Die Führungsvorrichtung ist zum linearen Führen der Laderaumabdeckung ausgebildet. Hierfür weist die Führungsvorrichtung die erste Führungsschiene mit dem ersten Führungsschlitten und die zweite Führungsschiene mit dem zweiten Führungsschlitten auf. Die Führungsschlitten sind in der jeweiligen Führungsschiene linear geführt und vorzugsweise gegen ein Verdrehen oder eine Querbewegung formschlüssig an der Führungsschiene gehalten. Die Führungsschlitten sind in den Führungsschienen zwischen dem eingefahrenen Zustand und dem ausgefahrenen Zustand linear bewegbar. Die Führungsschlitten und/oder die Führungsschienen weisen vorzugsweise Mittel zur Reduzierung einer Reibung zwischen den Führungsschlitten und der Führungsschiene auf, wie beispielsweise eine besonders glatte Oberfläche, gehärtete Oberfläche, Gleitbeschichtung, Rundungen oder dergleichen. Die Abdeckungsseite der Laderaumabdeckung ist an den Führungsschlitten gehalten. Die Abdeckungsseite ist vorzugsweise eine freie Endseite der Laderaumabdeckung.

Die Antriebsvorrichtung ist zum Bewegen der Führungsschlitten ausgebildet. Hierfür weist die Antriebsvorrichtung die zwei flexiblen Wellen auf, die jeweils mit einem der Führungsschlitten mechanisch koppelbar bzw. gekoppelt sind. Die flexiblen Wellen sind jeweils in dem zugehörigen Führungsrohr und dem Staurohr geführt. Beim Verfahren der flexiblen Wellen von dem ausgefahrenen Zustand in den eingefahrenen Zustand sind die flexiblen Wellen vom Führungsrohr in das Staurohr bewegbar und umgekehrt. Die Führungsrohrenden der Führungsrohre sind an den jeweiligen Führungsschienen gehalten. Zum linearen Verschieben der flexiblen Wellen weist die Antriebsvorrichtung den Motor auf. Der Motor ist direkt, insbesondere über ein Zahnrad, oder indirekt, insbesondere über ein Getriebe, wie beispielsweise ein Zahnradgetriebe, mit den flexiblen Wellen an einer Engriffstelle mechanisch im Eingriff, um somit die Rotationsenergie des Motors in Bewegungsenergie der flexiblen Wellen umzuwandeln. Die Eingriffstelle ist zwischen den Führungsrohren und den Staurohren angeordnet. Vorzugsweise ist das Zahnrad bzw. Getriebe in dem Gehäuse angeordnet. Weiter bevorzugt sind die flexiblen Wellen jeweils über ein Führungsrohr in das Gehäuse hineingeführt und über ein Staurohr aus dem Gehäuse herausgeführt. Der Motor ragt vorzugsweise mit einer Seite aus dem Gehäuse heraus.

Der vom Motor wegweisende zweite Staurohrbereich des zweiten Staurohrs ist an dem ersten Führungsrohr gehalten, beispielsweise durch eine Steckverbindung, eine Klemmverbindung, eine Schraubverbindung, eine Klebverbindung oder dergleichen. Eine Klemmvorrichtung kann beispielsweise als Steckaufnahme mit einer oder mehreren elastisch aufbiegbaren Haltebacken ausgebildet sein, welche ausgebildet sind, sich nach dem Aufbiegen zurück in eine Ausgangslage zu bewegen. Weiter bevorzugt weist die Klemmvorrichtung eine Aufnahme und eine Klemmschraube oder dergleichen auf. Der zweite Staurohrbereich ist an dem ersten Führungsrohr gehalten, sodass eine Vormontierbarkeit einzelner Module der Laderaumabdeckvorrichtung verbessert ist. Durch die Anbindung des zweiten Staurohrbereichs an das erste Führungsrohr weist die Antriebsvorrichtung der Laderaumabdeckvorrichtung eine höhere Eigenstabilität auf.

Eine erfindungsgemäße Laderaumabdeckvorrichtung hat gegenüber herkömmlichen Laderaumabdeckvorrichtung den Vorteil, dass mit einfachen Mitteln sowie auf eine kostengünstige Art und Weise eine besonders kompakte sowie einfach zu montierende Laderaumabdeckvorrichtung bereitgestellt ist. Durch die Anbindung des zweiten Staurohrs an das erste Führungsrohr ist eine Verwindungssteifigkeit der Antriebsvorrichtung erhöht. Ferner ist hierdurch die Montage der Führungsrohre an die Führungsschienen erleichtert.

Vorzugsweise ist ein vom Motor wegweisendes erstes Staurohrende des ersten Staurohrs als freistehendes Ende ausgebildet. Mit anderen Worten ist es bevorzugt, dass zumindest das erste Staurohrende, vorzugsweise das gesamte erste Staurohr, nicht an das zweite Führungsrohr direkt angebunden ist. Das erste Staurohrende und das zweite Staurohrende sind somit unterschiedlich voneinander ausgebildet. Dies hat den Vorteil, dass mit einfachen Mitteln sowie auf eine kostengünstige Art und Weise eine Montage der Laderaumabdeckvorrichtung unter Gewährleistung einer erforderlichen Eigenstabilität vereinfacht ist.

Alternativ kann erfindungsgemäß vorgesehen sein, dass ein vom Motor wegweisender erster Staurohrbereich des ersten Staurohrs an dem zweiten Führungsrohr oder dem zweiten Schienenendbereich gehalten ist. Dies kann beispielsweise durch eine Steckverbindung, eine Klemmverbindung, eine Schraubverbindung, eine Klebverbindung oder dergleichen realisiert sein. Eine Klemmvorrichtung kann beispielsweise als Steckaufnahme mit einer oder mehreren elastisch aufbiegbaren Haltebacken ausgebildet sein, welche ausgebildet sind, sich nach dem Aufbiegen zurück in eine Ausgangslage zu bewegen. Weiter bevorzugt weist die Klemmvorrichtung eine Aufnahme und eine Klemmschraube oder dergleichen auf. Vorzugsweise ist der erste Staurohrbereich an dem zweiten Führungsrohr gehalten, sodass eine Vormontierbarkeit einzelner Module der Laderaumabdeckvorrichtung verbessert ist. Die Anbindung des ersten Staurohrbereichs an das zweite Führungsrohr oder den zweiten Schienenendbereich hat den Vorteil, dass mit einfachen Mitteln sowie auf eine kostengünstige Art und Weise die Antriebsvorrichtung der Laderaumabdeckvorrichtung eine höhere Eigenstabilität aufweist.

Es ist erfindungsgemäß bevorzugt, dass ein dritter Rohrendbereich des ersten Führungsrohrs und/oder ein vierter Rohrendbereich des zweiten Führungsrohrs über eine Klemmvorrichtung an dem Gehäuse der Antriebsvorrichtung gehalten ist. Alternativ zu einer Klemmverbindung kann beispielsweise an einem Rohrendbereich ein Formschlussabschnitt ausgebildet sein, welcher in einen Gegenformschlussabschnitt des Gehäuses einbringbar ist, beispielsweise durch Öffnen des Gehäuses, wobei das Gehäuse hierfür vorzugsweise zwei relativ zueinander bewegbare Gehäuseteile aufweist. Die Gehäuseteile sind beispielsweise miteinander verschraubbar, verclipsbar oder dergleichen. Eine Trennlinie der Gehäuseteile verläuft vorzugsweise durch den Gegenformschlussabschnitt. Dies hat den Vorteil, dass mit einfachen Mitteln sowie auf eine kostengünstige Art und Weise eine Montage der Laderaumabdeckvorrichtung vereinfacht ist.

Vorzugsweise ist in dem Gehäuse ein erster Kanal zum Führen der ersten flexiblen Welle vom ersten Führungsrohr zum ersten Staurohr ausgebildet. Alternativ oder zusätzlich kann erfindungsgemäß vorgesehen sein, dass ein zweiter Kanal zum Führen der zweiten flexiblen Welle vom zweiten Führungsrohr zum zweiten Staurohr in dem Gehäuse ausgebildet ist. Durch einen Kanal ist eine relative Lageveränderung der Welle zum Zahnrad bzw. zum Getriebe in eine Richtung quer zur Längserstreckung der Welle im Gehäuse vermeidbar. Somit ist sicherstellbar, dass das Zahnrad bzw. das Getriebe stets eine bestimmungsgemäße Eingriffstiefe in die Welle aufweist und ein Wegdrücken der Welle quer zur Längserstreckung der Welle vermieden ist. Dies hat den Vorteil, dass mit einfachen Mitteln sowie auf eine kostengünstige Art und Weise eine Betriebssicherheit und Zuverlässigkeit der Laderaumabdeckvorrichtung verbessert sind.

Gemäß einer bevorzugten Weiterentwicklung der Erfindung kann bei einer Laderaumabdeckvorrichtung vorgesehen sein, dass das erste Führungsrohr und/oder das zweite Führungsrohr flexibel ausgebildet ist/sind. Besonders bevorzugt sind das erste Führungsrohr und das zweite Führungsrohr flexibel ausgebildet. Unter einer flexiblen Ausbildung wird im Rahmen der Erfindung insbesondere eine derartige Ausbildung verstanden, dass die Führungsrohre mittels der jeweils darin geführten flexiblen Welle auslenkbar ist und somit einer Querkraftbelastung leicht nachgeben kann. Dies hat den Vorteil, dass mit einfachen Mitteln sowie auf eine kostengünstige Art und Weise eine Reibung zwischen der flexiblen Welle und dem Führungsrohr reduzierbar ist, sodass eine Verstellung der Laderaumabdeckung verbessert ist.

Es ist erfindungsgemäß bevorzugt, dass das erste Staurohr und/oder das zweite Staurohr starr ausgebildet ist/sind. Besonders bevorzugt sind das erste Staurohr und das zweite Staurohr starr ausgebildet. Unter einer starren Ausbildung wird im Rahmen der Erfindung insbesondere eine derartige Ausbildung verstanden, bei welcher das Staurohr mittels der darin geführten flexiblen Wellen nicht auslenkbar ist. Dies hat den Vorteil, dass mit einfachen Mitteln sowie auf eine kostengünstige Art und Weise eine Eigenstabilität und somit eine Montierbarkeit der Laderaumabdeckvorrichtung verbessert ist.

Weiter bevorzugt weist die erste Führungsschiene ein erstes Schienenoberteil und ein erstes Schienenunterteil auf, wobei zwischen dem ersten Schienenoberteil und dem ersten Schienenunterteil ein erster linearer Führungskanal mit einem ersten seitlichen Längsschlitz ausgebildet ist, wobei der erste seitliche Längsschlitz durch das erste Schienenoberteil und das erste Schienenunterteil von zwei Seiten begrenzt ist, und wobei der erste Führungsschlitten in dem ersten linearen Führungskanal linear geführt ist. Weiter bevorzugt weist die zweite Führungsschiene ein zweites Schienenoberteil und ein zweites Schienenunterteil auf, wobei zwischen dem zweiten Schienenoberteil und dem zweiten Schienenunterteil ein zweiter linearer Führungskanal mit einem zweiten seitlichen Längsschlitz ausgebildet ist, wobei der zweite seitliche Längsschlitz durch das zweite Schienenoberteil und das zweite Schienenunterteil von zwei Seiten begrenzt ist, und wobei der zweite Führungsschlitten in dem zweiten linearen Führungskanal linear geführt ist. Vorzugsweise sind die Führungsschienen zumindest überwiegend aus dem Schienenoberteil und dem Schienenunterteil gebildet. Der lineare Führungskanal ist vorzugsweise im Wesentlichen durch das Schienenunterteil gebildet, wobei eine obere Kanalabdeckung des linearen Führungskanals vorzugsweise durch das Schienenoberteil gebildet ist. Dies hat den Vorteil, dass mit einfachen Mitteln sowie auf eine kostengünstige Art und Weise eine Montierbarkeit der Laderaumabdeckvorrichtung verbessert ist. Somit sind beispielsweise zunächst die Schienenunterteile am Laderaum bereitstellbar, sodass der Führungsschlitten und die übrigen Komponenten der Laderaumabdeckvorrichtung in einem Folgeschritt montierbar sind. Durch anschließende Montage der Schienenoberteile ist die lineare Führung der Führungsschlitten sichergestellt.

In einer besonders bevorzugten Ausgestaltung der Erfindung kann bei einer Laderaumabdeckvorrichtung vorgesehen sein, dass ein erster Schlittenabschnitt des ersten Führungsschlittens durch den ersten seitlichen Längsschlitz geführt ist. Vorzugsweise ist ein zweiter Schlittenabschnitt des zweiten Führungsschlittens durch den zweiten seitlichen Längsschlitz geführt. Über eine Wechselwirkung zwischen der in dem Längsschlitz geführten Schlittenabschnitte und den Führungsschienen ist ein Verkippen der Führungsschlitten um deren Schlittenlängsachse verhinderbar. Weiter bevorzugt sind die Schlittenabschnitte spielfrei oder im Wesentlichen spielfrei in dem jeweiligen Längsschlitz geführt. Dies hat den Vorteil, dass mit einfachen Mitteln sowie auf eine kostengünstige Art und Weise eine lineare Führung der Führungsschlitten verbessert ist.

Vorzugsweise ist ein erster Endabschnitt des ersten Führungsrohrs durch Zusammenspiel des ersten Schienenoberteils mit dem ersten Schienenunterteil formschlüssig oder kraftschlüssig an der ersten Führungsschiene gehalten. Weiter bevorzugt ist ein zweiter Endabschnitt des zweiten Führungsrohrs durch Zusammenspiel des zweiten Schienenoberteils mit dem zweiten Schienenunterteil formschlüssig oder kraftschlüssig an der zweiten Führungsschiene gehalten. Bei einer Montage sind somit zunächst die Führungsschlitten mit den daran befestigten flexiblen Wellen auf die Schienenunterteile aufsetzbar, dabei sind die Führungsrohre an den Schienenunterteilen anordenbar. Durch Montage der Schienenoberteile auf den Schienenunterteilen sind die Führungsrohre an der Führungsschiene gehalten. Die Endabschnitte der Führungsrohre weisen hierfür vorzugsweise einen Formschlussabschnitt, wie beispielsweise eine Sicke, Wulst oder dergleichen auf. Die Führungsschiene weist vorzugsweise einen entsprechenden Gegenformschlussabschnitt auf. Der Formschlussabschnitt und/oder der Gegenformschlussabschnitt ist vorzugsweise umlaufend ausgebildet, um eine Montage weiter zu erleichtern und den Halt der Führungsrohre an den Führungsschienen zu verbessern. Alternativ oder zusätzlich weisen die Außendurchmesser der Führungsrohre gegenüber den Aufnahmen der Führungsschienen ein leichtes Übermaß auf, sodass bei der Montage der Schienenoberteile auf den Schienenunterteilen eine Klemmkraft auf die Führungsrohre erzielbar ist. Dies hat den Vorteil, dass mit einfachen Mitteln sowie auf eine kostengünstige Art und Weise eine Montage der Laderaumabdeckvorrichtung weiter verbessert ist.

Besonders bevorzugt ist die erste flexible Welle zum eigenständigen Rückstellen in einen geraden Zustand oder in Richtung eines geraden Zustands ausgebildet. Weiter bevorzugt ist die zweite flexible Welle zum eigenständigen Rückstellen in einen geraden Zustand oder in Richtung eines geraden Zustands ausgebildet. Demnach weisen die flexiblen Wellen vorzugsweise eine Elastizität auf, wobei die flexiblen Wellen in einem ausgestreckten, geraden Zustand vorzugsweise entspannt sind. Eine Rückstellkraft ist durch biegen der flexiblen Wellen aufbaubar. Vorzugsweise sind die flexiblen Wellen ausgebildet, erst bei Überschreiten einer vordefinierten Minimalkrümmung eine Rückstellkraft bereitzustellen. Erfindungsgemäß ist es bevorzugt, dass zumindest der Wellenabschnitt der flexiblen Welle, welcher im ausgefahrenen Zustand innerhalb der Führungsschiene angeordnet ist, derartig ausgebildet ist. Dies hat den Vorteil, dass mit einfachen Mitteln sowie auf eine kostengünstige Art und Weise ein Schleifen der flexiblen Welle an der Führungsschiene vermeidbar ist.

Es ist erfindungsgemäß bevorzugt, dass in der ersten flexiblen Welle eine erste Federvorrichtung angeordnet ist, wobei die erste Federvorrichtung ausgebildet ist, die erste flexible Welle in einen geraden Zustand zurückzustellen. Weiter bevorzugt ist in der zweiten flexiblen Welle eine zweite Federvorrichtung angeordnet, wobei die zweite Federvorrichtung ausgebildet ist, die zweite flexible Welle in einen geraden Zustand zurückzustellen. Erfindungsgemäß ist es bevorzugt, dass zumindest in dem Wellenabschnitt der flexiblen Welle, welcher im ausgefahrenen Zustand innerhalb der Führungsschiene angeordnet ist, eine derartige Federvorrichtung angeordnet ist. Dies hat den Vorteil, dass mit einfachen Mitteln sowie auf eine kostengünstige Art und Weise ein Schleifen der flexiblen Welle an der Führungsschiene vermeidbar ist.

Gemäß einem zweiten Aspekt der Erfindung wird die Aufgabe durch ein Kraftfahrzeug gelöst. Das Kraftfahrzeug weist einen Laderaum mit einer oberen Laderaumöffnung auf. Erfindungsgemäß weist das Kraftfahrzeug zum automatischen Abdecken und Freigeben der Laderaumöffnung eine erfindungsgemäße Laderaumabdeckvorrichtung auf.

Bei dem erfindungsgemäßen Kraftfahrzeug ergeben sich sämtliche Vorteile, die bereits zu einer Laderaumabdeckvorrichtung gemäß dem ersten Aspekt der Erfindung beschrieben worden sind. Demnach hat das erfindungsgemäße Kraftfahrzeug gegenüber herkömmlichen Kraftfahrzeugen den Vorteil, dass mit einfachen Mitteln sowie auf eine kostengünstige Art und Weise ein Kraftfahrzeug bereitgestellt ist, welches eine besonders kompakte sowie einfach zu montierende Laderaumabdeckvorrichtung aufweist. Durch die Anbindung der Führungsrohre an die Staurohre ist eine Verwindungssteifigkeit der Antriebsvorrichtung erhöht und somit die Montage an der Führungsvorrichtung erleichtert.

Eine erfindungsgemäße Laderaumabdeckvorrichtung sowie ein erfindungsgemäßes Kraftfahrzeug werden nachfolgend anhand von Zeichnungen näher erläutert. Es zeigen jeweils schematisch:
- Figur 1: in einer Draufsicht eine bevorzugte Ausführungsform einer erfindungsgemäßen Laderaumabdeckvorrichtung,
- Figur 2: in einer Draufsicht eine weitere bevorzugte Ausführungsform einer erfindungsgemäßen Laderaumabdeckvorrichtung,
- Figur 3: in einer Seitenansicht einen Ausschnitt einer Laderaumabdeckvorrichtung gemäß einer bevorzugten Ausführungsform der Erfindung,
- Figur 4: in einer Schnittdarstellung eine bevorzugte Ausführungsform einer Führungsvorrichtung einer erfindungsgemäßen Laderaumabdeckvorrichtung,
- Figur 5: in einer Seitenansicht eine Anbindung einer ersten flexiblen Welle an einen ersten Führungsschlitten, und
- Figur 6: in einer Seitenansicht eine bevorzugte Ausführungsform eines erfindungsgemäßen Kraftfahrzeugs.

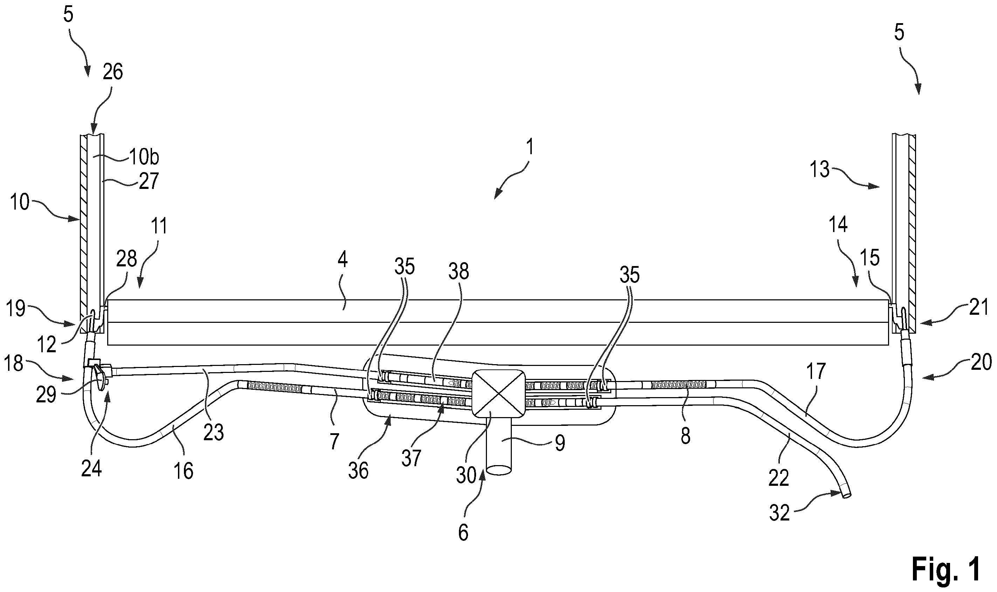

Elemente mit gleicher Funktion und Wirkungsweise sind in den Figuren 1 bis 6 jeweils mit denselben Bezugszeichen versehen.

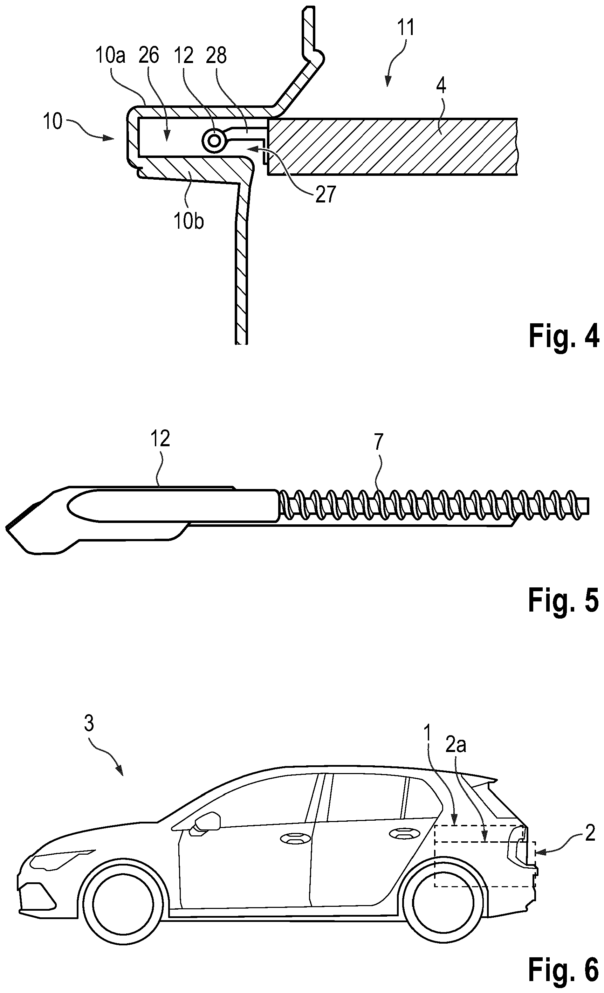

Fig. 1 zeigt eine bevorzugte Ausführungsform einer erfindungsgemäßen Laderaumabdeckvorrichtung 1 schematisch in einer Draufsicht. Die Laderaumabdeckvorrichtung 1 weist zum Abdecken einer Laderaumöffnung 2a (vgl. Fig. 6) eines Laderaums 2 (vgl. Fig. 6) eines Kraftfahrzeugs 3 (vgl. Fig. 6) eine rolloartig aufgebaute Laderaumabdeckung 4 auf. Die Laderaumabdeckung 4 ist über eine Führungsvorrichtung 5 linear geführt. Die Führungsvorrichtung 5 weist eine erste Führungsschiene 10 mit einem ersten Schienenunterteil 10b und einem in dieser Darstellung nicht abgebildeten ersten Schienenoberteil 10a (vgl. Fig.4) auf. Zwischen dem ersten Schienenoberteil 10a und dem ersten Schienenunterteil 10b ist ein erster linearer Führungskanal 26 sowie ein seitlicher Längsschlitz 27 ausgebildet. In dem ersten Führungskanal 26 ist ein erster Führungsschlitten 12 linear geführt. Ein seitlich abstehender erster Schlittenabschnitt 28 ist durch den Längsschlitz 27 geführt und an einer ersten Abdeckungsseite 11 der Laderaumabdeckung 4 gehalten. Ferner weist die Führungsvorrichtung 5 eine zweite Führungsschiene 13 auf, die gemäß der ersten Führungsschiene 10 ausgebildet ist. In der zweiten Führungsschiene 13 ist ein an einer zweiten Abdeckungsseite 14 der Laderaumabdeckung 4 gehaltener zweiter Führungsschlitten 15 linear geführt.

Zum translatorischen Bewegen des ersten Führungsschlittens 12 und des zweiten Führungsschlittens 15 weist die Laderaumabdeckvorrichtung 1 ein Antriebssystem 6 mit einer ersten flexiblen Welle 7, einer zweiten flexiblen Welle 8, einem Motor 9 und einem Getriebe 30 auf. Die erste flexible Welle 7 ist in einem ersten Führungsrohr 16 des Antriebssystems 6 geführt und an dem ersten Führungsschlitten 12 gehalten. Die zweite Flexible Welle 8 ist in einem zweiten Führungsrohr 17 des Antriebssystems 6 geführt und an dem zweiten Führungsschlitten 15 gehalten. Ein erster Rohrendbereich 18 des ersten Führungsrohrs 16 ist an einem ersten Schienenendbereich 19 der ersten Führungsschiene 10 gehalten. Ein dem ersten Schienenendbereich 19 entgegengesetzter dritter Rohrendbereich 33 des ersten Führungsrohrs 16 ist über eine Klemmvorrichtung 35 an einem Gehäuse 36, in welchem das Getriebe 30 angeordnet ist, gehalten. Ein zweiter Rohrendbereich 20 des zweiten Führungsrohrs 8 ist an einem zweiten Schienenendbereich 21 der zweiten Führungsschiene 13 gehalten. Ein dem zweiten Schienenendbereich 21 entgegengesetzter vierter Rohrendbereich 34 des zweiten Führungsrohrs 17 ist über eine Klemmvorrichtung 35 an dem Gehäuse 36 gehalten. Über den Motor 9 und das Getriebe 30 sind die erste flexible Welle 7 und die zweite flexible Welle 8 translatorisch antreibbar.

Zur Aufnahme eines dem ersten Führungsschlitten 12 abgewandten Endabschnitts der ersten flexiblen Welle 7 weist das Antriebssystem 6 ein erstes Staurohr 22 auf. Zur Aufnahme eines dem zweiten Führungsschlitten 15 abgewandten Endabschnitts der zweiten flexiblen Welle 8 weist das Antriebssystem 6 ein zweites Staurohr 23 auf. Das erste Staurohr 22 ist über eine Klemmvorrichtung 35 an dem Gehäuse 36 gehalten. Das zweite Staurohr 23 ist über eine Klemmvorrichtung 35 an dem Gehäuse 36 gehalten. Ein zweiter Staurohrbereich 24 des zweiten Staurohrs 23 ist über eine Haltevorrichtung 29 an dem ersten Führungsrohr 16 gehalten. Die Laderaumabdeckung 4 ist in einem aufgerollten Zustand, in welchem die Laderaumöffnung 2a freigegeben ist, dargestellt. Ein erstes Staurohrende 32 des ersten Staurohrs 22 ist als freistehendes Ende ausgebildet.

In dem Gehäuse 36 ist ein erster Kanal 37 zum Führen der ersten flexiblen Welle 7 zwischen dem ersten Führungsrohr 16 und dem ersten Staurohr 22 angeordnet. Ferner ist in dem Gehäuse 36 ein zweiter Kanal 38 zum Führen der zweiten flexiblen Welle 8 zwischen dem zweiten Führungsrohr 17 und dem zweiten Staurohr 23 angeordnet.

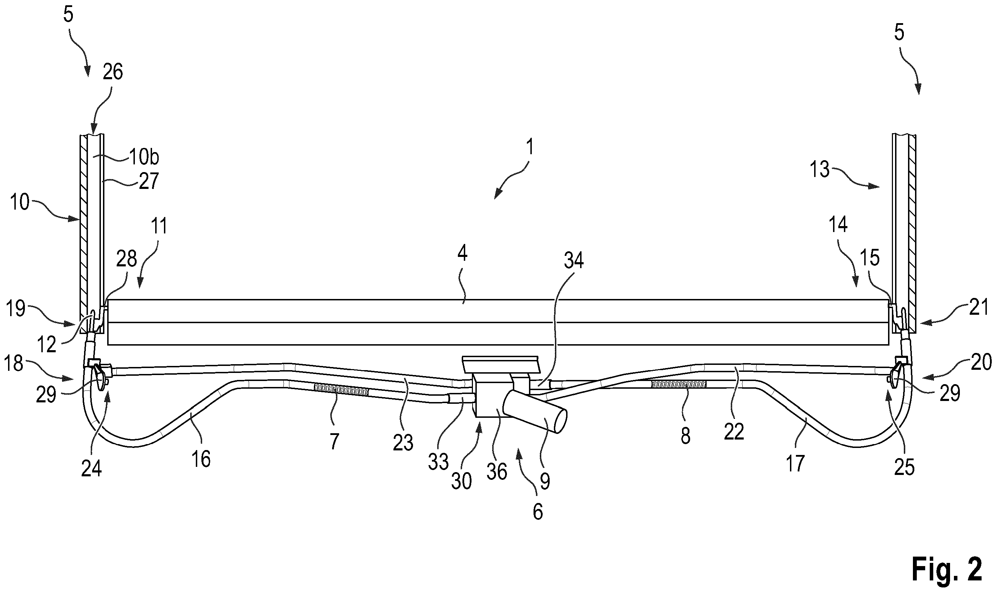

In Fig. 2 ist eine weitere bevorzugte Ausführungsform einer erfindungsgemäßen Laderaumabdeckvorrichtung 1 schematisch in einer Draufsicht abgebildet. Die in Fig. 2 dargestellte Ausführungsform unterscheidet sich von der in Fig. 1 dargestellten Ausführungsform in einer Ausbildung des ersten Staurohrs 22. Ein erster Staurohrbereich 25 des ersten Staurohrs 22 ist über eine Haltevorrichtung 29 an dem zweiten Führungsrohr 17 gehalten.

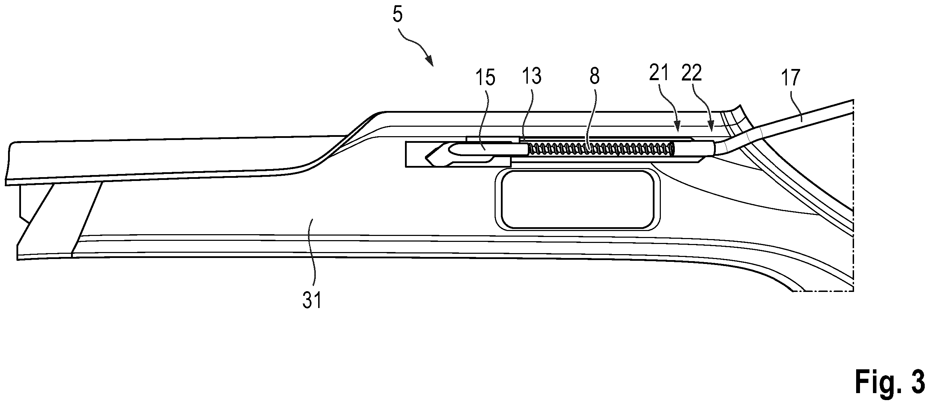

Fig. 3 zeigt einen Ausschnitt einer Führungsvorrichtung 5 einer Laderaumabdeckvorrichtung 1 gemäß einer bevorzugten Ausführungsform der Erfindung schematisch in einer Seitenansicht. In dieser Ansicht ist ein Ausschnitt eines Karosseriebauteils 31 dargestellt, an welchem die zweite Führungsschiene 13 der Führungsvorrichtung 5 angeordnet ist. Der zweite Führungsschlitten 15 ist in der zweiten Führungsschiene 13 linear geführt und an der zweiten flexiblen Welle 8 gehalten. Die zweite flexible Welle 8 ist über einen zweiten Rohrendbereich 20 des zweiten Führungsrohrs 17 in das zweite Führungsrohr 17 eingeführt. Der zweite Rohrendbereich 20 ist an dem zweiten Schienenendbereich 21 gehalten.

In Fig. 4 ist eine bevorzugte Ausführungsform einer Führungsvorrichtung 5 einer erfindungsgemäßen Laderaumabdeckvorrichtung 1 schematisch in einer Schnittdarstellung abgebildet. Der erste lineare Führungskanal 26 und der seitliche Längsschlitz 27 sind durch das erste Schienenoberteil 10a und das erste Schienenunterteil 10b gebildet. In dem ersten linearen Führungskanal 26 ist ein Teil des ersten Führungsschlittens 12 angeordnet. Der erste Schlittenabschnitt 28 des ersten Führungsschlittens 12 ist in dem seitlichen Längsschlitz 27 angeordnet und an der ersten Abdeckungsseite 11 der Laderaumabdeckung 4 gehalten.

Fig. 5 zeigt eine Anbindung einer ersten flexiblen Welle 7 an einen ersten Führungsschlitten 12 schematisch in einer Seitenansicht. Die flexible Welle 7 ist auf einen Bereich des ersten Führungsschlittens 12 aufgeschoben und an diesem gehalten, beispielsweise durch Klemmen, Verpressen, Schrauben, Crimpen oder dergleichen.

In Fig. 6 ist eine bevorzugte Ausführungsform eines erfindungsgemäßen Kraftfahrzeugs 3 schematisch in einer Seitenansicht dargestellt. Das Kraftfahrzeug 3 weist einen Laderaum 2 mit einer nach oben weisenden Laderaumöffnung 2a auf. An der Laderaumöffnung 2a ist eine erfindungsgemäße Laderaumabdeckvorrichtung 1 zum Verschließen und Freigeben der Laderaumöffnung 2a angeordnet.

### Bezugszeichenliste

- 1: Laderaumabdeckvorrichtung
- 2: Laderaum
- 2a: Laderaumöffnung
- 3: Kraftfahrzeug
- 4: Laderaumabdeckung
- 5: Führungsvorrichtung
- 6: Antriebssystem
- 7: erste flexible Welle
- 8: zweite flexible Welle
- 9: Motor
- 10: erste Führungsschiene
- 10a: erstes Schienenoberteil
- 10b: erstes Schienenunterteil

- 11: erste Abdeckungsseite
- 12: erster Führungsschlitten
- 13: zweite Führungsschiene
- 14: zweite Abdeckungsseite
- 15: zweiter Führungsschlitten
- 16: erstes Führungsrohr
- 17: zweites Führungsrohr
- 18: erster Rohrendbereich
- 19: erster Schienenendbereich
- 20: zweiter Rohrendbereich

- 21: zweiter Schienenendbereich
- 22: erstes Staurohr
- 23: zweites Staurohr
- 24: zweiter Staurohrbereich
- 25: erster Staurohrbereich
- 26: erster linearer Führungskanal
- 27: Längsschlitz
- 28: erster Schlittenabschnitt
- 29: Haltevorrichtung
- 30: Getriebe

- 31: Karosseriebauteil
- 32: erstes Staurohrende
- 33: dritter Rohrendbereich
- 34: vierter Rohrendbereich
- 35: Klemmvorrichtung
- 36: Gehäuse
- 37: erster Kanal
- 38: zweiter Kanal

## Patentansprüche

1. Laderaumabdeckvorrichtung (1) zum automatischen Abdecken und Freigeben einer Laderaumöffnung (2a) eines Laderaums (2) eines Kraftfahrzeugs (3), aufweisend eine ausfahrbare sowie einfahrbare Laderaumabdeckung (4) zum Abdecken des Laderaums (2), eine Führungsvorrichtung (5) zum linearen Führen der Laderaumabdeckung (4) zwischen einem ausgefahrenen Zustand, in welchem die Laderaumabdeckung (4) den Laderaum (2) bedeckt, sowie einem eingefahrenen Zustand, in welchem die Laderaumabdeckung (4) den Laderaum (2) freigibt, und ein Antriebssystem (6) zum gezielten Bewegen der Laderaumabdeckung (4), wobei das Antriebssystem (6) ein Gehäuse (34) aufweist, wobei das Antriebssystem (6) zum Bewegen der Laderaumabdeckung (4) eine erste flexible Welle (7), eine zweite flexible Welle (8) sowie einen Motor (9) zum Bewegen der ersten flexiblen Welle (7) und der zweiten flexiblen Welle (8) aufweist, wobei die Führungsvorrichtung (5) zum linearen Führen der Laderaumabdeckung (4) eine erste Führungsschiene (10), einen an der ersten Führungsschiene (10) linear beweglich geführten, an einer ersten Abdeckungsseite (11) der Laderaumabdeckung (4) befestigbaren ersten Führungsschlitten (12), eine zweite Führungsschiene (13) sowie einen an der zweiten Führungsschiene (13) linear beweglich geführten, an einer zweiten Abdeckungsseite (14) der Laderaumabdeckung (4) befestigbaren zweiten Führungsschlitten (15) aufweist, wobei die erste flexible Welle (7) mit dem ersten Führungsschlitten (12) und die zweite flexible Welle (8) mit dem zweiten Führungsschlitten (15) mechanisch gekoppelt ist, wobei das Antriebssystem (6) ein erstes Führungsrohr (16) sowie ein zweites Führungsrohr (17) aufweist, wobei die erste flexible Welle (7) zumindest teilweise in dem ersten Führungsrohr (16) und die zweite flexible Welle (8) zumindest teilweise in dem zweiten Führungsrohr (17) angeordnet ist, wobei ein erster Rohrendbereich (18) des ersten Führungsrohrs (16) an einem ersten Schienenendbereich (19) der ersten Führungsschiene (10) gehalten ist, wobei der erste Schienenendbereich (19) einem Bereich der ersten Führungsschiene (10), in welchem der erste Führungsschlitten (12) in dem eingefahrenen Zustand angeordnet ist, benachbart ist, wobei ein zweiter Rohrendbereich (20) des zweiten Führungsrohrs (17) an einem zweiten Schienenendbereich (21) der zweiten Führungsschiene (13) gehalten ist, wobei der zweite Schienenendbereich (21) einem Bereich der zweiten Führungsschiene (13), in welchem der zweite Führungsschlitten (15) in dem eingefahrenen Zustand angeordnet ist, benachbart ist, und wobei das Antriebssystem (6) ein erstes Staurohr (22) zur Aufnahme eines ersten Abschnitts der ersten flexiblen Welle (7) beim Bewegen des ersten Führungsschlittens (15) in den eingefahrenen Zustand und ein zweites Staurohr (23) zur Aufnahme eines zweiten Abschnitts der zweiten flexiblen Welle (8) beim Bewegen des zweiten Führungsschlittens (15) in den eingefahrenen Zustand aufweist,
**dadurch gekennzeichnet,**
**dass** ein vom Motor (9) wegweisender zweiter Staurohrbereich (24) des zweiten Staurohrs (23) an dem ersten Führungsrohr (16) gehalten ist.

2. Laderaumabdeckvorrichtung (1) nach Anspruch 1,
**dadurch gekennzeichnet,**
**dass** ein vom Motor (9) wegweisendes erstes Staurohrende (32) des ersten Staurohrs (22) als freistehendes Ende ausgebildet ist.

3. Laderaumabdeckvorrichtung (1) nach Anspruch 1,
**dadurch gekennzeichnet,**
**dass** ein vom Motor (9) wegweisender erster Staurohrbereich (25) des ersten Staurohrs (22) an dem zweiten Führungsrohr (17) oder dem zweiten Schienenendbereich (21) gehalten ist.

4. Laderaumabdeckvorrichtung (1) nach einem der vorangegangenen Ansprüche, **dadurch gekennzeichnet,**
**dass** ein dritter Rohrendbereich (33) des ersten Führungsrohrs (16) und/oder ein vierter Rohrendbereich (34) des zweiten Führungsrohrs (17) über eine Klemmvorrichtung (35) an dem Gehäuse (36) der Antriebsvorrichtung (6) gehalten ist.

5. Laderaumabdeckvorrichtung (1) nach einem der vorangegangenen Ansprüche, **dadurch gekennzeichnet,**
**dass** in dem Gehäuse (36) ein erster Kanal (37) zum Führen der ersten flexiblen Welle (7) vom ersten Führungsrohr (16) zum ersten Staurohr (22) und/oder ein zweiter Kanal (38) zum Führen der zweiten flexiblen Welle (8) vom zweiten Führungsrohr (17) zum zweiten Staurohr (23) ausgebildet ist.

6. Laderaumabdeckvorrichtung (1) nach einem der vorangegangenen Ansprüche, **dadurch gekennzeichnet,**
**dass** das erste Führungsrohr (16) und/oder das zweite Führungsrohr (17) flexibel ausgebildet ist.

7. Laderaumabdeckvorrichtung (1) nach einem der vorangegangenen Ansprüche, **dadurch gekennzeichnet,**
**dass** das erste Staurohr (22) und/oder das zweite Staurohr (23) starr ausgebildet ist.

8. Laderaumabdeckvorrichtung (1) nach einem der vorangegangenen Ansprüche, **dadurch gekennzeichnet,**
**dass** die erste Führungsschiene (10) ein erstes Schienenoberteil (10a) und ein erstes Schienenunterteil (10b) aufweist, wobei zwischen dem ersten Schienenoberteil (10a) und dem ersten Schienenunterteil (10b) ein erster linearer Führungskanal (26) mit einem ersten seitlichen Längsschlitz (27) ausgebildet ist, wobei der erste seitliche Längsschlitz durch das erste Schienenoberteil (10a) und das erste Schienenunterteil (10b) von zwei Seiten begrenzt ist, und wobei der erste Führungsschlitten (12) in dem ersten linearen Führungskanal (26) linear geführt ist.

9. Laderaumabdeckvorrichtung (1) nach Anspruch 8,
**dadurch gekennzeichnet,**
**dass** ein erster Schlittenabschnitt (28) des ersten Führungsschlittens (12) durch den ersten seitlichen Längsschlitz (27) geführt ist.

10. Laderaumabdeckvorrichtung (1) nach Anspruch 8 oder 9,
**dadurch gekennzeichnet,**
**dass** der erste Rohrendbereich (18) des ersten Führungsrohrs (16) durch Zusammenspiel des ersten Schienenoberteils (10a) mit dem ersten Schienenunterteil (10b) formschlüssig oder kraftschlüssig an der ersten Führungsschiene (10) gehalten ist.

11. Laderaumabdeckvorrichtung (1) nach einem der vorangegangenen Ansprüche, **dadurch gekennzeichnet,**
**dass** die erste flexible Welle (7) zum eigenständigen Rückstellen in einen geraden Zustand oder in Richtung eines geraden Zustands ausgebildet ist.

12. Laderaumabdeckvorrichtung (1) nach einem der vorangegangenen Ansprüche, **dadurch gekennzeichnet,**
**dass** in der ersten flexiblen Welle (7) eine erste Federvorrichtung angeordnet ist, wobei die erste Federvorrichtung ausgebildet ist, die erste flexible Welle (7) in einen geraden Zustand zurückzustellen.

13. Kraftfahrzeug (3), aufweisend einen Laderaum (2) mit einer oberen Laderaumöffnung (2a),
**dadurch gekennzeichnet,**
**dass** das Kraftfahrzeug (3) zum automatischen Abdecken und Freigeben der Laderaumöffnung (2a) eine Laderaumabdeckvorrichtung (1) nach einem der vorangegangenen Ansprüche aufweist.

## Claims

1. Cargo compartment covering device (1) for automatically covering and uncovering a cargo compartment opening (2a) of a cargo compartment (2) of a motor vehicle (3), comprising an extendable and retractable cargo compartment cover (4) for covering the cargo compartment (2), a guide device (5) for linearly guiding the cargo compartment cover (4) between an extended state in which the cargo compartment cover (4) covers the cargo compartment (2), and a retracted state in which the cargo compartment cover (4) does not cover the cargo compartment (2),and a drive system (6) for targeted movement of the cargo compartment cover (4), the drive system (6) comprising a housing (34), the drive system (6) for moving the cargo compartment cover (4) comprising a first flexible shaft (7), a second flexible shaft (8) and a motor (9) for moving the first flexible shaft (7) and the second flexible shaft (8), the guide device (5) for linearly guiding the cargo compartment cover (4) comprising a first guide rail (10), a first guide carriage (12) which is guided in a linearly movable manner on the first guide rail (10) and can be fastened to a first cover face (11) of the cargo compartment cover (4), a second guide rail (13), and a second guide carriage (15) which is guided in a linearly movable manner on the second guide rail (13) and can be fastened to a second cover face (14) of the cargo compartment cover (4), the first flexible shaft (7) being mechanically coupled to the first guide carriage (12) and the second flexible shaft (8) being mechanically coupled to the second guide carriage (15), the drive system (6) comprising a first guide tube (16) and a second guide tube (17), the first flexible shaft (7) being arranged at least partially in the first guide tube (16) and the second flexible shaft (8) being arranged at least partially in the second guide tube (17), a first tube end region (18) of the first guide tube (16) being held on a first rail end region (19) of the first guide rail (10), the first rail end region (19) being adjacent to a region of the first guide rail (10) in which the first guide carriage (12) is arranged in the retracted state, a second tube end region (20) of the second guide tube (17) being held on a second rail end region (21) of the second guide rail (13), the second rail end region (21) being adjacent to a region of the second guide rail (13) in which the second guide carriage (15) is arranged in the retracted state, and the drive system (6) comprising a first pressure tube (22) for receiving a first portion of the first flexible shaft (7) when the first guide carriage (15) is moved into the retracted state, and a second pressure tube (23) for receiving a second portion of the second flexible shaft (8) when the second guide carriage (15) is moved into the retracted state,
**characterized in that**
a second pressure tube region (24) of the second pressure tube (23), which region faces away from the motor (9), is held on the first guide tube (16).

2. Cargo compartment covering device (1) according to claim 1, **characterized in that**
a first pressure tube end (32) of the first pressure tube (22), which end faces away from the motor (9), is designed as a free-standing end.

3. Cargo compartment covering device (1) according to claim 1, **characterized in that**
a first pressure tube region (25) of the first pressure tube (22), which region faces away from the motor (9), is held on the second guide tube (17) or the second rail end region (21).

4. Cargo compartment covering device (1) according to any of the preceding claims,
**characterized in that**
a third pipe end region (33) of the first guide pipe (16) and/or a fourth pipe end region (34) of the second guide pipe (17) is held on the housing (36) of the drive device (6) by means of a clamping device (35).

5. Cargo compartment covering device (1) according to any of the preceding claims,
**characterized in that**
a first channel (37) for guiding the first flexible shaft (7) from the first guide tube (16) to the first pressure tube (22) and/or a second channel (38) for guiding the second flexible shaft (8) from the second guide tube (17) to the second pressure tube (23) is formed in the housing (36).

6. Cargo compartment covering device (1) according to any of the preceding claims,
**characterized in that**
the first guide tube (16) and/or the second guide tube (17) is flexible.

7. Cargo compartment covering device (1) according to any of the preceding claims,
**characterized in that**
the first pressure tube (22) and/or the second pressure tube (23) is rigid.

8. Cargo compartment covering device (1) according to any of the preceding claims,
**characterized in that**
the first guide rail (10) has a first upper rail part (10a) and a first lower rail part (10b), a first linear guide channel (26), which has a first lateral longitudinal slot (27), being formed between the first upper rail part (10a) and the first lower rail part (10b), the first lateral longitudinal slot being delimited on two faces by the first upper rail part (10a) and the first lower rail part (10b), and the first guide carriage (12) being linearly guided in the first linear guide channel (26).

9. Cargo compartment covering device (1) according to claim 8, **characterized in that**
a first carriage portion (28) of the first guide carriage (12) is guided through the first lateral longitudinal slot (27).

10. Cargo compartment covering device (1) according to claim 8 or claim 9, **characterized in that**
the first tube end region (18) of the first guide tube (16) is held positively or non-positively on the first guide rail (10) by the interaction of the first upper rail part (10a) with the first lower rail part (10b).

11. Cargo compartment covering device (1) according to any of the preceding claims,
**characterized in that**
the first flexible shaft (7) is designed to independently return to a straight state or in the direction of a straight state.

12. Cargo compartment covering device (1) according to any of the preceding claims,
**characterized in that**
a first spring device is arranged in the first flexible shaft (7), the first spring device being designed to return the first flexible shaft (7) to a straight state.

13. Motor vehicle (3) comprising a cargo compartment (2) having an upper cargo compartment opening (2a),
**characterized in that**
the motor vehicle (3) comprises a cargo compartment covering device (1) according to any of the preceding claims for automatically covering and uncovering the cargo compartment opening (2a).

## Revendications

1. Dispositif de recouvrement d'espace de chargement (1) permettant de recouvrir et de libérer automatiquement une ouverture d'espace de chargement (2a) d'un espace de chargement (2) d'un véhicule automobile (3), présentant un élément de recouvrement d'espace de chargement (4) pouvant être déployé ainsi que rétracté et permettant de recouvrir l'espace de chargement (2), un dispositif de guidage (5) permettant de guider linéairement l'élément de recouvrement d'espace de chargement (4) entre un état déployé, dans lequel l'élément de recouvrement d'espace de chargement (4) recouvre l'espace de chargement (2), ainsi qu'un état rétracté, dans lequel l'élément de recouvrement d'espace de chargement (4) libère l'espace de chargement (2), et un système d'entraînement (6) permettant de déplacer de manière ciblée l'élément de recouvrement d'espace de chargement (4), dans lequel le système d'entraînement (6) présente un boîtier (34), dans lequel le système d'entraînement (6) permettant de déplacer l'élément de recouvrement d'espace de chargement (4) présente un premier arbre flexible (7), un second arbre flexible (8) ainsi qu'un moteur (9) permettant de déplacer le premier arbre flexible (7) et le second arbre flexible (8), dans lequel le dispositif de guidage (5) permettant de guider linéairement l'élément de recouvrement d'espace de chargement (4) présente un premier rail de guidage (10), un premier chariot de guidage (12) guidé de manière mobile linéairement sur le premier rail de guidage (10) et pouvant être fixé sur un premier côté d'élément de recouvrement (11) de l'élément de recouvrement d'espace de chargement (4), un second rail de guidage (13) ainsi qu'un second chariot de guidage (15) guidé de manière mobile linéairement sur le second rail de guidage (13) et pouvant être fixé sur un second côté d'élément de recouvrement (14) de l'élément de recouvrement d'espace de chargement (4), dans lequel le premier arbre flexible (7) est accouplé mécaniquement au premier chariot de guidage (12) et le second arbre flexible (8) est accouplé mécaniquement au second chariot de guidage (15), dans lequel le système d'entraînement (6) présente un premier tube de guidage (16) ainsi qu'un second tube de guidage (17), dans lequel le premier arbre flexible (7) est disposé au moins partiellement dans le premier tube de guidage (16) et le second arbre flexible (8) est disposé au moins partiellement dans le second tube de guidage (17), dans lequel une première zone d'extrémité de tube (18) du premier tube de guidage (16) est maintenue sur une première zone d'extrémité de rail (19) du premier rail de guidage (10), dans lequel la première zone d'extrémité de rail (19) est adjacente à une zone du premier rail de guidage (10) dans laquelle le premier chariot de guidage (12) est disposé dans l'état rétracté, dans lequel une deuxième zone d'extrémité de tube (20) du second tube de guidage (17) est maintenue sur une seconde zone d'extrémité de rail (21) du second rail de guidage (13), dans lequel la seconde zone d'extrémité de rail (21) est adjacente à une zone du second rail de guidage (13) dans laquelle le second chariot de guidage (15) est disposé dans l'état rétracté, et dans lequel le système d'entraînement (6) présente un premier tube de Pitot (22) destiné à recevoir une première section du premier arbre flexible (7) lors du déplacement du premier chariot de guidage (15) dans l'état rétracté et un second tube de Pitot (23) destiné à recevoir une seconde section du second arbre flexible (8) lors du déplacement du second chariot de guidage (15) dans l'état rétracté,
**caractérisé en ce**
**qu**'une seconde zone de tube de Pitot (24) du second tube de Pitot (23), orientée à l'opposé du moteur (9), est maintenue sur le premier tube de guidage (16).

2. Dispositif de recouvrement d'espace de chargement (1) selon la revendication 1,
**caractérisé en ce**
**qu**'une première extrémité de tube de Pitot (32) du premier tube de Pitot (22), orientée à l'opposé du moteur (9), est conçue sous forme d'extrémité libre.

3. Dispositif de recouvrement d'espace de chargement (1) selon la revendication 1,
**caractérisé en ce**
**qu**'une première zone de tube de Pitot (25) du premier tube de Pitot (22), orientée à l'opposé du moteur (9), est maintenue sur le second tube de guidage (17) ou sur la seconde zone d'extrémité de rail (21).

4. Dispositif de recouvrement d'espace de chargement (1) selon l'une des revendications précédentes,
**caractérisé en ce**
**en ce qu'**une troisième zone d'extrémité de tube (33) du premier tube de guidage (16) et/ou une quatrième zone d'extrémité de tube (34) du second tube de guidage (17) sont maintenues sur le boîtier (36) du dispositif d'entraînement (6) par l'intermédiaire d'un dispositif de serrage (35).

5. Dispositif de recouvrement d'espace de chargement (1) selon l'une des revendications précédentes,
**caractérisé en ce**
**que** dans le boîtier (36) sont formés un premier canal (37) permettant de guider le premier arbre flexible (7) du premier tube de guidage (16) au premier tube de Pitot (22) et/ou un second canal (38) permettant de guider le second arbre flexible (8) du second tube de guidage (17) au second tube de Pitot (23).

6. Dispositif de recouvrement d'espace de chargement (1) selon l'une des revendications précédentes,
**caractérisé en ce**
**que** le premier tube de guidage (16) et/ou le second tube de guidage (17) sont conçus de manière à être flexibles.

7. Dispositif de recouvrement d'espace de chargement (1) selon l'une des revendications précédentes,
**caractérisé en ce**
**que** le premier tube de Pitot (22) et/ou le second tube de Pitot (23) sont conçus de manière à être rigides.

8. Dispositif de recouvrement d'espace de chargement (1) selon l'une des revendications précédentes,
**caractérisé en ce**
**que** le premier rail de guidage (10) présente une première partie supérieure de rail (10a) et une première partie inférieure de rail (10b), dans lequel un premier canal de guidage linéaire (26) comportant une première fente longitudinale latérale (27) est formé entre la première partie supérieure de rail (10a) et la première partie inférieure de rail (10b), dans lequel la première fente longitudinale latérale est délimitée de deux côtés par la première partie supérieure de rail (10a) et par la première partie inférieure de rail (10b), et dans lequel le premier chariot de guidage (12) est guidé linéairement dans le premier canal de guidage linéaire (26).

9. Dispositif de recouvrement d'espace de chargement (1) selon la revendication 8,
**caractérisé en ce**
**qu'**une première section de chariot (28) du premier chariot de guidage (12) est guidée à travers la première fente longitudinale latérale (27).

10. Dispositif de recouvrement d'espace de chargement (1) selon la revendication 8 ou 9,
**caractérisé en ce**
**que** la première zone d'extrémité de tube (18) du premier tube de guidage (16) est maintenue sur le premier rail de guidage (10) par coopération de la première partie supérieure de rail (10a) avec la première partie inférieure de rail (10b) par complémentarité de forme ou par force.

11. Dispositif de recouvrement d'espace de chargement (1) selon l'une des revendications précédentes,
**caractérisé en ce**
**que** le premier arbre flexible (7) est conçu pour revenir de manière autonome dans un état rectiligne ou en direction d'un état rectiligne.

12. Dispositif de recouvrement d'espace de chargement (1) selon l'une des revendications précédentes,
**caractérisé en ce**
**qu**'un premier dispositif élastique est disposé dans le premier arbre flexible (7), dans lequel le premier dispositif élastique est conçu pour ramener le premier arbre flexible (7) dans un état rectiligne.

13. Véhicule automobile (3), présentant un espace de chargement (2) comportant une ouverture d'espace de chargement (2a) supérieure,
**caractérisé en ce**
**que** le véhicule automobile (3) présente, pour recouvrir et libérer automatiquement l'ouverture d'espace de chargement (2a), un dispositif de recouvrement d'espace de chargement (1) selon l'une des revendications précédentes.
